# EUROPÄISCHE PATENTSCHRIFT

(11) **EP 3 215 753 B1**
(45) Veröffentlichungstag und Bekanntmachung des Hinweises auf die Patenterteilung: **17.06.2020**
(21) Anmeldenummer: 15794071.9
(22) Anmeldetag: 16.10.2015
(51) Int. Cl.: F16D 13/52, F16F 15/131, F16F 15/133, B60K 6/40

(54) **HYBRIDMODUL FÜR EIN KRAFTFAHRZEUG**
HYBRID MODULE FOR A MOTOR VEHICLE
MODULE HYBRIDE POUR UN VÉHICULE AUTOMOBILE

(30) Priorität: 06.11.2014 DE 102014222644
(43) Veröffentlichungstag der Anmeldung: 13.09.2017
(73) Patentinhaber: Schaeffler Technologies AG & Co. KG, 91074 Herzogenaurach (DE)
(72) Erfinder: MAIENSCHEIN, Stephan, 76534 Baden-Baden (DE); DEGLER, Mario, 76534 Baden-Baden (DE)
(86) Internationale Anmeldenummer: PCT/DE2015/200478
(87) Internationale Veröffentlichungsnummer: WO 2016/070878

(56) Entgegenhaltungen:
- DE-A1-102010 030 690
- DE-A1-102011 078 110
- DE-A1-102013 201 667
- DE-A1-102013 213 422
- US-A1- 2007 007 059

## Beschreibung

Die Erfindung betrifft ein Hybridmodul für einen Antriebsstrang in einem Kraftfahrzeug. Insbesondere betrifft die Erfindung die Reduzierung einer Drehungleichförmigkeit in dem Hybridmodul.

In einem Antriebsstrang, beispielsweise eines Kraftfahrzeugs, sind zwei unterschiedliche Antriebsmotoren vorgesehen. Ein erster Antriebsmotor umfasst üblicherweise einen Verbrennungsmotor, während ein zweiter Antriebsmotor als Elektromotor ausgebildet ist. In einer Ausführungsform ist ein Rotor des Elektromotors permanent mit einer Eingangswelle eines Getriebes verbunden, das auf ein Antriebsrad des Kraftfahrzeugs wirkt. Übliche Techniken, die zur Reduzierung einer Drehungleichförmigkeit einer durch den Verbrennungsmotor bereitgestellten Drehbewegung verwendet werden, berücksichtigen üblicherweise nicht den Elektromotor. Eine Schwingungseigenform des Antriebsstrangs kann durch den Elektromotor signifikant verändert sein. Dadurch können sich ungünstige Schwingungsamplituden, insbesondere am Eingang des Getriebes, ergeben. Daraus können sich unerwünschte Vibrationen oder Geräusche ergeben, die Komforteinbußen nach sich ziehen können.

Aus jeder der DE 10 2013 201 667 A1, der DE 10 2010 030 690 A1 und der DE 10 2013 213 422 A1 ist ein Hybridmodul gemäß dem Oberbegriff des Anspruchs 1 bekannt.

Bezüglich weiteren Standes der Technik wird auf die US 2007/007059 A1 und die DE 10 2011 078 110 A1 verwiesen.

Es ist die Aufgabe der vorliegenden Erfindung, ein Hybridmodul anzugeben, das eine verbesserte Reduzierung einer Drehungleichförmigkeit oder Drehschwingung bereitstellt. Die Erfindung löst diese Aufgabe mittels eines Hybridmoduls mit den Merkmalen des unabhängigen Anspruchs. Unteransprüche geben bevorzugte Ausführungsformen wieder.

Ein Hybridmodul für einen Antriebsstrang eines Kraftfahrzeugs umfasst eine Eingangsseite zur Verbindung mit einem Verbrennungsmotor, eine Ausgangsseite zur Verbindung mit einem Antriebsrad, einen elektrischen Antriebsmotor mit einem Stator und einem Rotor und eine Übertragungseinrichtung für Drehmoment zwischen dem Rotor und der Ausgangsseite. Dabei ist die Übertragungseinrichtung zur Reduzierung einer Drehungleichförmigkeit ausgebildet.

Das Hybridmodul ist auch unter der Bezeichnung Hybridkopf bekannt. Durch das Platzieren der zur Fixierung einer Drehungleichförmigkeit ausgebildeten Übertragungseinrichtung auf der bezüglich der Kupplung vom Verbrennungsmotor entfernten Seite kann die Drehbewegung, die mit dem Antriebsrad gekoppelt ist, verbessert kontrolliert werden. Insbesondere kann die Drehbewegung unabhängig davon, ob die Kupplung geöffnet oder geschlossen ist, geglättet werden. Dabei kann die Kupplung zum vollständigen oder nur zum teilweisen Trennen des Antriebsstrangs eingerichtet sein. Üblicherweise ist hierzu eine Trockenkupplung vorgesehen; in einer Ausführungsform kann die Kupplung jedoch auch eine Nasskupplung, insbesondere eine Mehrscheiben-Nasskupplung, umfassen.

Die Übertragungseinrichtung umfasst bevorzugterweise einen Tilger, der insbesondere als drehzahladaptiver Tilger oder als Festfrequenztilger ausgebildet ist. Der drehzahladaptive Tilger kann dabei als Fliehkraftpendel ausgebildet sein. Der drehzahladaptive Tilger kann Drehschwingungen unterschiedlicher Frequenzen wirksam verringern, während der Festfrequenztilger Drehschwingungen einer bestimmten Frequenz verringert.

Das Fliehkraftpendel kann dabei wenigstens eine Pendelmasse aufweisen, die axial innenliegend, das bedeutet zwischen zwei axial beabstandet angeordneten Pendelmassenträgern (Pendelflanschen) gegenüber diesen verschwenkbar aufgenommen ist. Auch oder alternativ kann ein Pendelmassenpaar vorgesehen sein, bestehend aus wenigstens zwei axial beanstandet angeordneten Pendelmassen, die axial dazwischen einen Pendelmassenträger (Pendelflansch) aufnehmen, an dem diese verschwenkbar aufgenommen sind.

Das Fliehkraftpendel kann besonders bevorzugt als Trapezpendel ausgebildet sein, gekennzeichnet durch eine bei der Bewegung der Pendelmasse entlang der Pendelbahn auftretende Eigenrotation der Pendelmasse.

Der Rotor ist erfindungsgemäß als adaptiver Tilger wirksam und dabei kann der Rotor Drehschwingungen verringern. Dabei wirkt der Rotor durch gezielte elektrische Ansteuerung gegenphasig den Drehschwingungen entgegen.

Alternativ oder zusätzlich kann die Übertragungseinrichtung einen Torsionsdämpfer mit einem elastischen Element umfassen. Das elastische Element kann eine vorbestimmte Verdrehung des Antriebsstrangs erlauben, wodurch die Drehbewegung geglättet werden kann.

In einer weiteren Ausführungsform umfasst die Übertragungseinrichtung sowohl ein Fliehkraftpendel als auch einen Torsionsdämpfer. Dabei kann der Tilger parallel zum Torsionsdämpfer angeordnet sein. Ein Pendelflansch des Fliehkraftpendels, an dem eine Pendelmasse in der Drehebene beweglich angebracht ist, kann so außerhalb des Drehmomentflusses zwischen dem Verbrennungsmotor bzw. dem Elektromotor und dem Antriebsrad liegen. Das Fliehkraftpendel kann dementsprechend kleiner dimensioniert sein. Das Hybridmodul kann dadurch kompakter aufgebaut sein.

Der Torsionsdämpfer kann auch zwischen der Kupplung und der Ausgangsseite und dabei vor oder nach dem Tilger angeordnet sein. Dabei liegt der Pendelflansch des Fliehkraftpendels im Drehmomentfluss zwischen dem Verbrennungsmotor bzw. dem Elektromotor und dem Antriebsrad. Vorteilhafterweise können dabei der Torsionsdämpfer und der Pendelflansch des Fliehkraftpendels mechanisch miteinander integriert sein, wodurch sich eine verbesserte Platzausnutzung ergeben kann.

In einer Ausführungsform umfasst der Torsionsdämpfer eine oder mehrere Dämpferstufen. Insbesondere kann der Torsionsdämpfer ein elastisches Element in Form einer Bogenfeder umfassen. Die Bogenfeder kann einen vergrößerten Verdrehwinkel im Antriebsstrang erlauben und dadurch eine verbesserte Glättung, insbesondere niederfrequenter Drehungleichförmigkeiten bereitstellen. In einer anderen Ausführungsform kann das elastische Element auch eine gerade Zylinderfeder umfassen. Es sind auch Ausführungsformen möglich, bei denen Torsionsdämpfer mit elastischen Elementen gleichen oder unterschiedlichen Typs im Hybridmodul angeordnet sind.

Zwischen der Eingangsseite und der Kupplung kann eine weitere Übertragungseinrichtung für Drehmomente eingesetzt sein, wobei die Übertragungseinrichtung zur Reduzierung einer Drehungleichförmigkeit ausgebildet ist.

Die weitere Übertragungseinrichtung kann in unterschiedlichen Formen ausgeführt sein, die oben mit Bezug auf die erste Übertragungseinrichtung beschrieben sind. Bei geschlossener Kupplung können die Übertragungseinrichtungen praktisch auf der gleichen rotierenden Masse wirken, die die Kupplung und den Rotor des Elektromotors umfasst. Hierzu ist es bevorzugt, dass die Steifigkeit dieser Übertragungsstrecke ausreichend hoch ist. Ist die Kupplung geöffnet, so wird der zum Antriebsrad führende Teil des Antriebsstrangs nur noch durch die weiteren Übertragungseinrichtungen bezüglich einer Drehungleichförmigkeit behandelt.

In einer weiteren Ausführungsform umfasst die weitere Übertragungseinrichtung einen Tilger, der insbesondere als Fliehkraftpendel ausgebildet sein kann. Das Fliehkraftpendel kann einfach und kostensparend mit den anderen Elementen des Hybridmoduls integrierbar sein. Außerdem kann das Fliehkraftpendel effektiv zum Abbauen von Drehungleichförmigkeiten wirken.

Der Rotor ist als aktiver Tilger zur Verringerung von Drehungleichförmigkeiten, insbesondere Drehschwingungen ausgebildet.

In noch einer weiteren Ausführungsform umfasst das Hybridmodul ferner eine hydraulische Betätigungseinrichtung für die Kupplung. Das Hybridmodul kann dadurch verbessert als Funktionsblock ausgebildet sein, der leichter in einem System zum Antrieb des Kraftfahrzeugs integriert sein kann. In einer anderen Ausführungsform kann die Betätigungseinrichtung für die Kupplung auch elektrisch aufgebaut sein. Die Betätigungseinrichtung kann an einer Stelle im Hybridmodul angeordnet sein, die schlecht zugänglich ist, sodass die Verbindung der Betätigungseinrichtung mit der Kupplung sowie die Ansteuerung einfach gehalten sein können.

Es ist weiterhin bevorzugt, dass die Kupplung radial innerhalb des Rotors angeordnet ist. Der Rotor kann beispielsweise als Hohlwelle ausgebildet sein, auf dessen radialer Innenseite die Kupplung liegt. Das Hybridmodul kann so in axialer oder radialer Richtung verkleinerte Außenabmessungen aufweisen.

Ferner kann auch die Übertragungseinrichtung innerhalb des Rotors angeordnet sein. Dies gilt insbesondere für die erstgenannte Übertragungseinrichtung, alternativ oder zusätzlich kann auch die weitere Übertragungseinrichtung radial innerhalb des Rotors angeordnet sein. Dadurch können sich weitere Platzvorteile ergeben.

Die Erfindung wird nun mit Bezug auf die beigefügten Figuren genauer beschrieben, in denen:
- Figur 1: einen Antriebsstrang mit einem Hybridmodul zum Einsatz in einem Kraftfahrzeug;
- Figur 2: den Antriebsstrang von Figur 1 mit einer alternativen Ausführungsform des Hybridmoduls;
- Figur 3: Varianten einer Übertragungseinrichtung für Drehmomente für das Hybridmodul von Figuren 1 und 2;
- Figur 4: Varianten eines Fliehkraftpendels als Übertragungseinrichtung für Drehmomente für das Hybridmodul von Figuren 1 oder 2;
- Figur 5: ein Ausführungsbeispiel für ein Hybridmodul;
- Figur 6: ein Ausführungsbeispiel für ein Fliehkraftpendel als Übertragungseinrichtung für Drehmomente in einem Hybridmodul; und
- Figur 7: ein Ausführungsbeispiel für einen Drehschwingungsdämpfer als Übertragungseinrichtung für Drehmomente in einem Hybridmodul
darstellt.

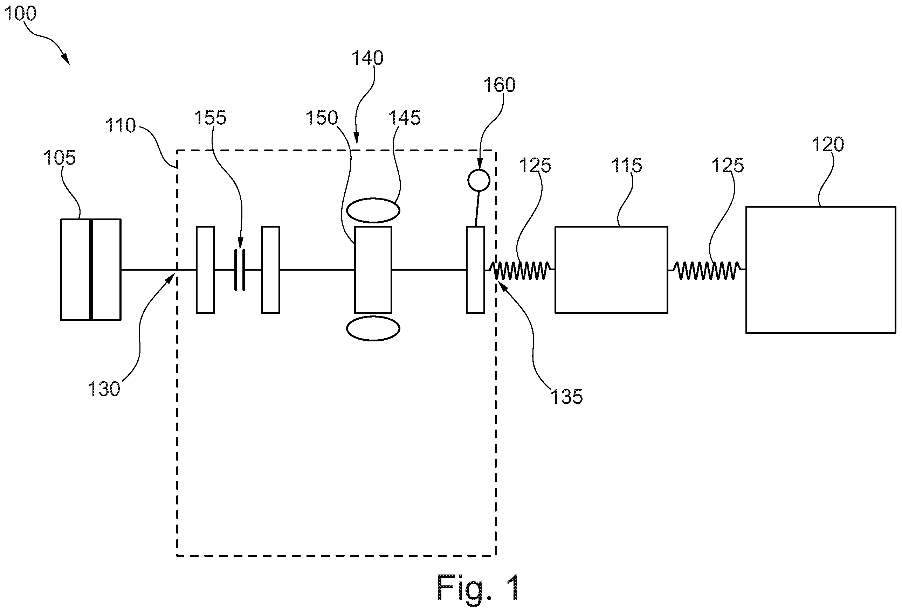

Figur 1 zeigt einen Antriebsstrang 100, beispielsweise in einem Kraftfahrzeug. Der Antriebsstrang 100 umfasst einen Verbrennungsmotor 105, ein Hybridmodul 110, ein optionales Getriebe 115 und ein Antriebsrad 120. Das Getriebe 115 ist bevorzugterweise ein teil- oder vollautomatisiertes Getriebe, beispielsweise ein Doppelkupplungsgetriebe, ein Stufenautomat oder ein Getriebe mit stufenlos variabler Übersetzung (Continuously Variable Transmission, CVT). An verschiedenen Stellen des Antriebsstrangs 100 können Torsions- oder Drehschwingungsdämpfer 125 vorgesehen sein, insbesondere zwischen dem Hybridmodul 110 und dem Getriebe 115 oder dem zwischen dem Getriebe 115 und dem Antriebsrad 120.

Das Hybridmodul 110 umfasst eine Eingangsseite 130 zur Verbindung mit dem Verbrennungsmotor 105 und einer Ausgangsseite 135 zur Verbindung mit dem zum Antriebsrad 120 führenden Teil des Antriebsstrangs 100. Als elektrischer Antriebsmotor für das Kraftfahrzeug ist ein Elektromotor 140mit einem Stator 145 und einem Rotor 150 vorgesehen. Darüber hinaus sind eine trennbare Kupplung 155 und eine Übertragungseinrichtung 160 für Drehmoment vorgesehen. Die Kupplung 155 ist zwischen der Eingangsseite 130 und dem Rotor 150 des Elektromotors 140 angeordnet und dazu eingerichtet, in Abhängigkeit einer Betätigung einen Drehmomentfluss im Antriebsstrang 100 zu ermöglichen oder zu unterbrechen. Die Übertragungseinrichtung 160 ist zwischen dem Rotor 150 des Elektromotors 140 und der Ausgangsseite 135 angeordnet.

In der dargestellten, bevorzugten Ausführungsform umfasst der Elektromotor 140 einen radial außen liegenden Stator 145 und einen radial innen liegenden Rotor 150; in einer anderen Ausführungsform kann auch die umgekehrte Anordnung gewählt sein. Die Übertragungseinrichtung 160 ist dazu eingerichtet, eine Drehungleichförmigkeit, die der Drehbewegung der Ausgangsseite 135 überlagert sein kann, zu reduzieren. Das dargestellte Symbol für die Übertragungseinrichtung 160 repräsentiert ein Fliehkraftpendel, zusätzlich oder alternativ dazu kann jedoch auch ein Drehschwingungsdämpfer vorgesehen sein, wie unten noch genauer ausgeführt wird.

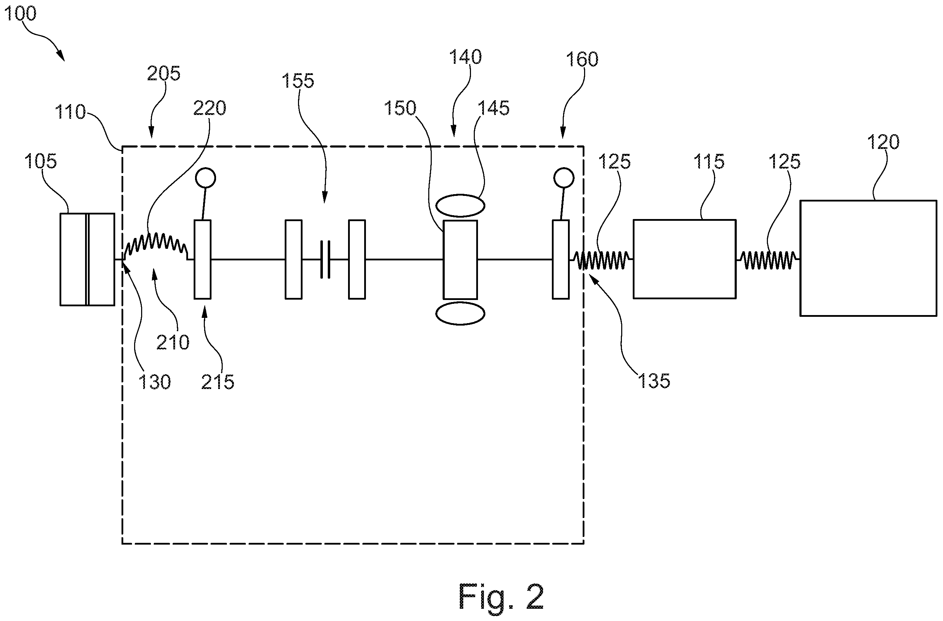

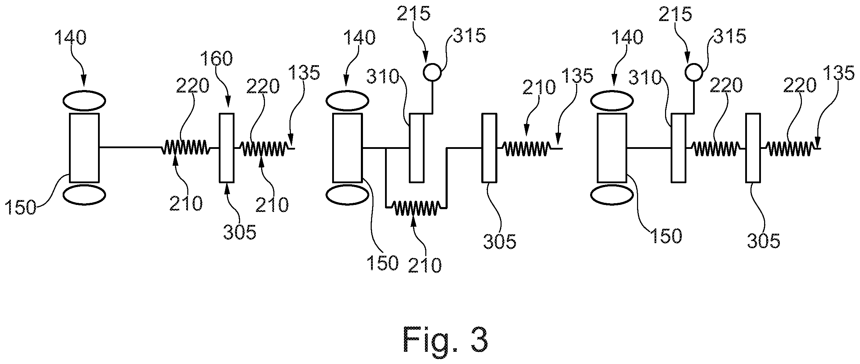

Figur 2 zeigt den Antriebsstrang 100 von Figur 1 mit einer alternativen Ausführungsform des Hybridmoduls 110. Im Unterschied zu der in Figur 1 dargestellten Ausführungsform ist hier zusätzlich zur Übertragungseinrichtung 160 eine weitere Übertragungseinrichtung 205, die zwischen der Eingangsseite 130 und der Kupplung 155 angeordnet ist. Die weitere Übertragungseinrichtung 205 kann einen Drehschwingungsdämpfer 210, ein Fliehkraftpendel 215 oder, wie dargestellt, eine Kombination daraus umfassen. Der dargestellte Drehschwingungsdämpfer 210 umfasst ein elastisches Element 220, das dazu eingerichtet ist, eine vorbestimmte Verdrehung, hier zwischen der Eingangsseite 130 und der mit der Kupplung 155 verbundenen Seite, zu erlauben. Das elastische Element 220 kann, wie angedeutet, als Bogenfeder oder als radial innen oder radial außen liegende Zylinderfeder ausgebildet sein. Weitere Ausführungsformen werden unten mit Bezug auf Figur 3 noch genauer beschrieben. Im Übrigen gelten für die Übertragungseinrichtung 160 die gleichen Variationsmöglichkeiten wie für die weitere Übertragungseinrichtung 205 und umgekehrt.

Figur 3 zeigt Varianten der Übertragungseinrichtung 160 für das Hybridmodul 110 der vorangehenden Figuren. Von links nach rechts sind drei unterschiedliche Ausführungsformen dargestellt.

In der links dargestellten Ausführungsform sind zwischen dem Rotor 150 des Elektromotors 140 und der Ausgangsseite 135 zwei Drehschwingungsdämpfer 210 in Serie angeordnet. Zwischen den beiden Drehschwingungsdämpfer 210 kann optional ein Flansch 305 vorgesehen sein. Die Drehschwingungsdämpfer 210 umfassen jeweils ein elastisches Element 220, von denen jedes alternativ als Bogenfeder oder als Zylinderfeder ausgebildet sein kann. In einer Ausführungsform sind beide elastische Elemente 220 als Zylinderfedern ausgebildet, wobei eines der elastischen Elemente 220 radial innen und eines radial außen am Flanschteil 105 angebracht ist.

In der mittig dargestellten Ausführungsform ist zusätzlich ein Fliehkraftpendel 215 mit dem Rotor 150 des Elektromotors 140 verbunden. Das Fliehkraftpendel 215 umfasst einen Pendelflansch 310, das mit dem Rotor 150 verbunden ist, und eine Pendelmasse 315, die in der Drehebene des Pendelflanschs 310 verschiebbar an diesem befestigt ist. In dieser Ausführungsform liegt der Pendelflansch 310 außerhalb des Drehmomentflusses zwischen dem Rotor 150 und der Ausgangsseite 135 bzw., allgemeiner ausgedrückt, des Drehmomentflusses zwischen dem Verbrennungsmotor 105 und dem Antriebsrad 120.

Die rechts dargestellte Ausführungsform entspricht der mittig dargestellten Ausführungsform, mit dem Unterschied, dass das Fliehkraftpendel 215 zum Drehschwingungsdämpfer 210 nicht parallel, sondern in Serie geschaltet ist, sodass der Pendelflansch 310 im übertragenen Drehmomentfluss liegt.

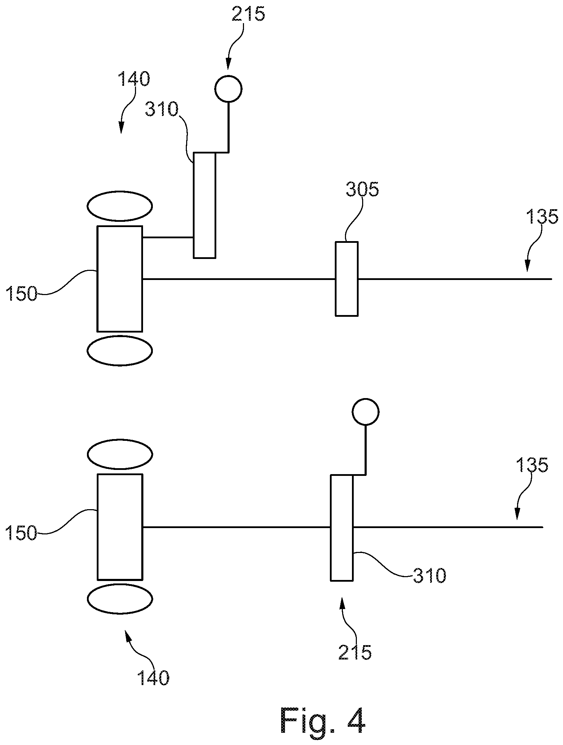

Figur 4 zeigt Varianten des Fliehkraftpendels 215 als Übertragungseinrichtung 160 für Drehmomente für das Hybridmodul 110 der Figuren 1 oder 2. Im oberen Bereich ist eine erste Ausführungsform dargestellt, bei der der Pendelflansch 310 des parallel zum optionalen, zur Ausgangsseite 135 führenden Flansch 305 mit dem Rotor 150 des Elektromotors 140 verbunden ist. Der Pendelflansch 310 wird dabei von dem zwischen der Eingangsseite 130 und der Ausgangsseite 135 fließenden Drehmoment nicht durchflossen.

Im unteren Bereich ist eine alternative Ausführungsform dargestellt, bei der der Flansch 305 und der Pendelflansch 310 zusammenfallen, sodass der Pendelflansch 310 des Fliehkraftpendels 215 im Drehmomentfluss zwischen der Eingangsseite 130 und der Ausgangsseite 135 des Hybridmoduls 110 liegt.

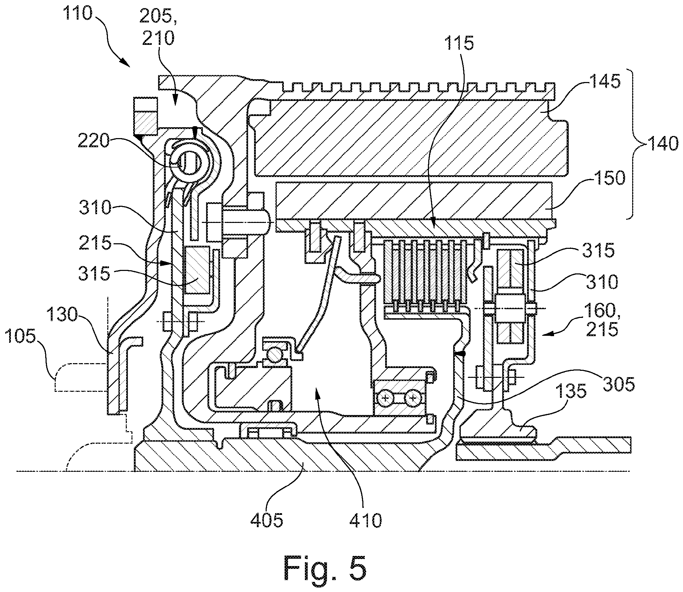

Figur 5 zeigt ein Ausführungsbeispiel für ein Hybridmodul 110. Im Wesentlichen entspricht die dargestellte Ausführungsform der Figur 2.

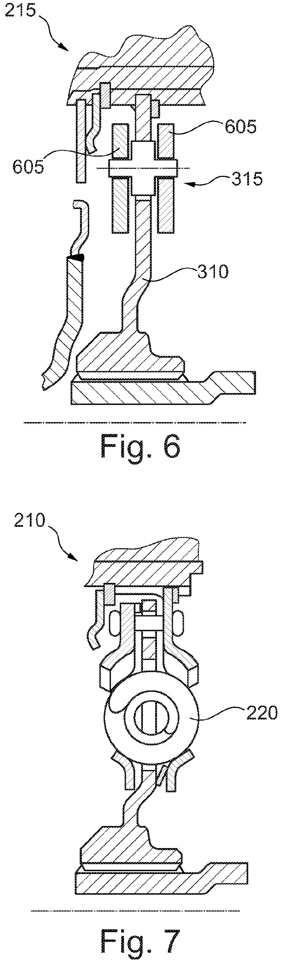

Links ist die Eingangsseite 130 zur Verbindung mit dem Verbrennungsmotor 105 dargestellt. Von dort geht der Drehmomentfluss radial nach außen und über ein exemplarisch als Bogenfeder ausgeführtes elastisches Element 220 eines Drehschwingungsdämpfers 210 zu einem Pendelflansch 310 eines Fliehkraftpendels 215. Rein exemplarisch ist die Pendelmasse 315 des Fliehkraftpendels 215 axial innenliegend ausgeführt, wie unten mit Bezug auf Figur 6 noch genauer erläutert wird.

An der radialen Innenseite des Pendelflanschs 310 führt der Drehmomentfluss über eine Welle 405 axial in der Darstellung nach rechts und dann über einen Flansch 305 radial nach außen zur Kupplung 155. Die Kupplung 155 ist exemplarisch als nasslaufende Mehrscheiben-Lamellenkupplung aufgebaut. Bevorzugterweise liegt die Kupplung 155 radial innerhalb des Rotors 150 des Elektromotors 140. Lamellen bzw. Reibelemente der Kupplung 155 können mittels einer Betätigungseinrichtung 410, die exemplarisch als hydraulische Betätigungseinrichtung ausgeführt ist, axial gegeneinander gepresst werden, um den Drehmomentfluss an den Rotor 150 des Elektromotors 140 weiterzuleiten.

Mit dem Rotor 150 ist auch die Übertragungseinrichtung 160 verbunden, die als Fliehkraftpendel 215 ausgebildet ist. Der Pendelflansch 310 des Fliehkraftpendels 215 führt radial nach innen zur Ausgangsseite 135 des Hybridmoduls 110. Auch das Fliehkraftpendel 215 weist exemplarisch eine axial innenliegende Pendelmasse 315 auf.

Figur 6 zeigt ein Ausführungsbeispiel für ein Fliehkraftpendel 215 als Übertragungseinrichtung 205 oder 160 im Hybridmodul 110 der Figuren 1 oder 2. Dabei wird eine axial außenliegende Pendelmasse 315 verwendet, die zwei Pendelelemente 605 umfasst, die auf unterschiedlichen axialen Seiten des Pendelflanschs 310 liegen und miteinander verbunden sind.

Figur 7 zeigt ein Ausführungsbeispiel für einen Drehschwingungsdämpfer 210 als Übertragungseinrichtung 205 oder 160 im Hybridmodul 110 der Figuren 1 oder 2. Das elastische Element 220 ist hierbei als Zylinderfeder ausgebildet. Es kann auch eine Anordnung mehrerer Zylinderfedern verwendet werden, beispielsweise wie dargestellt zwei parallel geschaltete, koaxiale Zylinderfedern.

## Patentansprüche

1. Hybridmodul (110) für einen Antriebsstrang eines Kraftfahrzeugs aufweisend:
- eine Eingangsseite (130) zur Verbindung mit einem Verbrennungsmotor (105);
- eine Ausgangsseite (135) zur Verbindung mit einem Antriebsrad (120);
- einen elektrischen Antriebsmotor (140) mit einem Stator und einem Rotor (150);
- eine Übertragungseinrichtung (160) für Drehmoment zwischen dem Rotor (150) und der Ausgangsseite (135),
wobei die Übertragungseinrichtung (160) zur Reduzierung einer Drehungleichförmigkeit ausgebildet ist,
**dadurch gekennzeichnet, dass** der Rotor als aktiver Tilger zur Verringerung von Torsionsschwingungen wirkt, um durch gezielte elektrische Ansteuerung gegenphasig den Drehschwingungen entgegenzuwirken.

2. Hybridmodul (110) nach Anspruch 1, wobei eine lösbare Kupplung (155) zur Verbindung der Eingangsseite (130) mit dem Rotor (150) vorgesehen ist.

3. Hybridmodul (110) nach Anspruch 1 oder 2, wobei die Übertragungseinrichtung (160) einen Tilger aufweist.

4. Hybridmodul (110) nach Anspruch 3, wobei die Übertragungseinrichtung (160) einen Torsionsdämpfer (210) mit einem elastischen Element (220) aufweist.

5. Hybridmodul (110) nach Anspruch 4, wobei der Tilger parallel zum Torsionsdämpfer (210) angeordnet ist.

6. Hybridmodul (110) nach Anspruch 4 oder 5, wobei der Torsionsdämpfer (210) zwischen der Kupplung und der Ausgangsseite (135) und dabei vor oder nach dem Tilger angeordnet ist.

7. Hybridmodul (110) nach einem der Ansprüche 4 bis 6, wobei der Torsionsdämpfer eine oder mehrere Dämpferstufen aufweist.

8. Hybridmodul (110) nach einem der vorangehenden Ansprüche, wobei zwischen der Eingangsseite (130) und der Kupplung (155) eine weitere Übertragungseinrichtung (205) für Drehmoment eingesetzt ist, die zur Reduzierung einer Drehungleichförmigkeit ausgebildet ist.

9. Hybridmodul (110) nach Anspruch 8, wobei die weitere Übertragungseinrichtung einen Tilger aufweist.

10. Hybridmodul (110) nach einem der vorangehenden Ansprüche, wobei die Kupplung (155) radial innerhalb des Rotors (150) angeordnet ist.

11. Hybridmodul (110) nach einem der vorangehenden Ansprüche, wobei die Übertragungseinrichtung (160, 205) radial innerhalb des Rotors (150) angeordnet ist.

## Claims

1. A hybrid module (110) for a drive train of a motor vehicle, having:
- an input side (130) for connection to an internal combustion engine (105);
- an output side (135) for connection to a drive wheel (120);
- an electric drive motor (140) with a stator and a rotor (150);
- a transmission device (160) for torque between the rotor (150) and the output side (135),
the transmission device (160) being designed to reduce rotational non-uniformity, **characterised in that** the rotor acts as an active absorber to reduce torsional vibrations in order to counteract the torsional vibrations in opposite phases by targeted electrical control.

2. The hybrid module (110) according to claim 1, wherein a detachable coupling (155) for connecting the input side (130) to the rotor (150) is provided.

3. The hybrid module (110) according to claim 1 or 2, wherein the transmission device (160) has an absorber.

4. The hybrid module (110) according to claim 3, wherein the transmission device (160) has a torsion damper (210) with an elastic element (220).

5. The hybrid module (110) according to claim 4, wherein the absorber is arranged parallel to the torsion damper (210).

6. The hybrid module (110) according to claim 4 or 5, wherein the torsion damper (210) is arranged between the coupling and the output side (135) and, therefore, before or after the absorber.

7. The hybrid module (110) according to one of claims 4 to 6, wherein the torsion damper has one or more damper stages.

8. The hybrid module (110) according to one of the preceding claims, wherein, between the input side (130) and the coupling (155), a further transmission device (205) for torque is used, which is designed to reduce a rotational non-uniformity.

9. The hybrid module (110) according to claim 8, wherein the further transmission device has an absorber.

10. The hybrid module (110) according to one of the preceding claims, wherein the coupling (155) is arranged radially inside the rotor (150).

11. The hybrid module (110) according to one of the preceding claims, wherein the transmission device (160, 205) is arranged radially inside the rotor (150).

## Revendications

1. Module hybride (110) pour une chaîne cinématique d'un véhicule automobile, comprenant :
- un côté entrée (130) destiné à être relié à un moteur à combustion interne (105) ;
- un côté sortie (135) destiné à être relié à une roue motrice (120) ;
- un moteur d'entraînement électrique (140) comprenant un stator et un rotor (150) ;
- un dispositif de transmission (160) pour le couple entre le rotor (150) et le côté sortie (135),
le dispositif de transmission (160) étant conçu pour réduire une irrégularité de rotation, **caractérisé en ce que** le rotor agit comme un absorbeur actif pour réduire les vibrations de torsion afin de contrer les vibrations de rotation en contre-phase par une commande électrique ciblée.

2. Module hybride (110) selon la revendication 1, un embrayage amovible (155) étant prévu pour relier le côté entrée (130) au rotor (150).

3. Module hybride (110) selon la revendication 1 ou 2, le dispositif de transmission (160) présentant un absorbeur.

4. Module hybride (110) selon la revendication 3, le dispositif de transmission (160) présentant un amortisseur de torsion (210) comprenant un élément élastique (220).

5. Module hybride (110) selon la revendication 4, l'absorbeur étant disposé parallèlement à l'amortisseur de torsion (210).

6. Module hybride (110) selon la revendication 4 ou 5, l'amortisseur de torsion (210) étant disposé entre l'embrayage et le côté sortie (135) et à cet endroit avant ou après l'absorbeur.

7. Module hybride (110) selon l'une quelconque des revendications 4 à 6, l'amortisseur de torsion présentant un ou plusieurs étages d'amortisseur.

8. Module hybride (110) selon l'une quelconque des revendications précédentes, entre le côté entrée (130) et l'embrayage (155), un autre dispositif de transmission (205) étant utilisé pour le couple, qui est conçu pour réduire une irrégularité de rotation.

9. Module hybride (110) selon la revendication 8, l'autre dispositif de transmission présentant un absorbeur.

10. Module hybride (110) selon l'une quelconque des revendications précédentes, l'embrayage (155) étant disposé radialement à l'intérieur du rotor (150).

11. Module hybride (110) selon l'une quelconque des revendications précédentes, le dispositif de transmission (160, 205) étant disposé radialement à l'intérieur du rotor (150).
